# DEMANDE DE BREVET EUROPEEN

(11) **EP 1 640 884 A1**
(43) Date de publication de la demande: **29.03.2006**
(21) Numéro de dépôt: 05300751.4
(22) Date de dépôt: 15.09.2005
(51) Int. Cl.: G06F 17/30, G06F 17/28

(54) **Représentation imagée et vocale d'un document multimédia**

(30) Priorité: 24.09.2004 FR 0410162
(71) Demandeur: FRANCE TELECOM, 75015 Paris (FR)
(72) Inventeur: FILOCHE, Pascal, 22700, PERROS-GUIREC (FR); MARTIN, Frédéric, 35830, BETTON (FR); LE CALVEZ, Gilles, 22700, PERROS-GUIREC (FR)
(74) Mandataire: Lapoux, Roland

(57) **Abrégé**

Un serveur de représentation (SR) comprend un parseur (PD) pour transformer un document multimédia en un document pré-analysé décrivant des éléments du document multimédia, des moyens (MG, ML, AL, EE, MT, MDT) pour déterminer des caractéristiques de fond et de forme du document pré-analysé, et une unité centrale (UC) pour sélectionner des caractéristiques imagées en fonction des caractéristiques de fond et de forme du document pré-analysé. L'unité centrale génère une représentation imagée du document multimédia en fonction des caractéristiques imagées sélectionnées. Le serveur (SR) comprend également des moyens pour déterminer une représentation vocale du document.

## Description

La présente invention concerne un procédé de génération d'une représentation imagée d'un document multimédia. L'invention a trait également à un procédé de génération d'une représentation vocale d'un document multimédia à associer à la représentation imagée du document.

Actuellement, il est difficile d'avoir un aperçu rapide et complet d'un document multimédia sans parcourir celui-ci entièrement. Des résumés établis automatiquement ou manuellement de document multimédia offrent une alternative, mais requièrent encore du temps et du courage pour les lire.

Il existe donc un besoin de disposer d'une représentation d'un document facilitant rapidement et intuitivement l'appréhension de l'objet du document.

L'invention a pour **objectif** de fournir automatiquement une représentation imagée et éventuellement vocale d'un document multimédia afin de remédier aux inconvénients précités.

Pour atteindre cet objectif, un procédé pour générer une représentation imagée d'un document multimédia est caractérisé en ce qu'il comprend les étapes de :
- transformer le document multimédia en un document pré-analysé décrivant des éléments du document multimédia,
- déterminer des caractéristiques de fond et de forme du document pré-analysé,
- sélectionner des caractéristiques imagées en fonction des caractéristiques de fond et de forme du document pré-analysé, et
- générer une représentation imagée du document multimédia en fonction des caractéristiques imagées sélectionnées.

L'étape de déterminer des caractéristiques de fond et de forme du document pré-analysé peut comprendre diverses étapes dont certaines dépendent de caractéristiques lexicales, syntaxiques et sémantiques du document pré-analysé, comme on le verra dans la suite de la description.

La représentation imagée du document multimédia peut être associée à une représentation vocale. Le procédé comprend alors les étapes de :
- sélectionner un texte à synthétiser en fonction du document pré-analysé et des caractéristiques de fond et de forme du document pré-analysé,
- déterminer des caractéristiques de fond et de forme du texte à synthétiser sélectionné,
- sélectionner des caractéristiques vocales en fonction des caractéristiques de fond et de forme du document pré-analysé et du texte à synthétiser sélectionné, et
- synthétiser vocalement le texte à synthétiser en fonction des caractéristiques vocales sélectionnées.

L'invention concerne également un dispositif informatique pour générer une représentation imagée d'un document multimédia. Le dispositif est caractérisé en ce qu'il comprend :
- un moyen pour transformer le document multimédia en un document pré-analysé décrivant des éléments du document multimédia,
- des moyens pour déterminer des caractéristiques de fond et de forme du document pré-analysé,
- un moyen pour sélectionner des caractéristiques imagées en fonction des caractéristiques de fond et de forme du document pré-analysé, et
- un moyen pour générer une représentation imagée du document multimédia en fonction des caractéristiques imagées sélectionnées.

Le dispositif peut comprendre également les moyens suivants :
- un moyen pour sélectionner un texte à synthétiser en fonction du document pré-analysé et des caractéristiques de fond et de forme du document pré-analysé,
- des moyens pour déterminer des caractéristiques de fond et de forme du texte à synthétiser sélectionné,
- un moyen pour sélectionner des caractéristiques vocales en fonction des caractéristiques de fond et de forme du document pré-analysé et du texte à synthétiser sélectionné, et
- un moyen pour synthétiser vocalement le texte à synthétiser en fonction des caractéristiques vocales sélectionnées.

D'autres caractéristiques et avantages de la présente invention apparaîtront plus clairement à la lecture de la description suivante de plusieurs réalisations préférées de l'invention, données à titre d'exemples non limitatifs, en référence aux **dessins** annexés correspondants dans lesquels :
- la figure 1 est un bloc-diagramme schématique d'un système de génération de représentation imagée et vocale mettant en oeuvre un procédé de génération de représentation imagée selon une réalisation préférée de l'invention ;
- la figure 2 est un algorithme du procédé de génération de représentation imagée selon l'invention ; et
- la figure 3 est un algorithme du procédé de génération de représentation vocale selon l'invention mettant en oeuvre le procédé de génération de représentation imagée selon l'invention.

Dans la suite de la description, un document multimédia est un fichier numérique comprenant au moins du texte et éventuellement au moins une image et/ou au moins une vidéo, c'est-à-dire une séquence d'images animées. Un document multimédia est par exemple une page au format HTML (HyperText Markup Language) ou un document issu d'un traitement de texte.

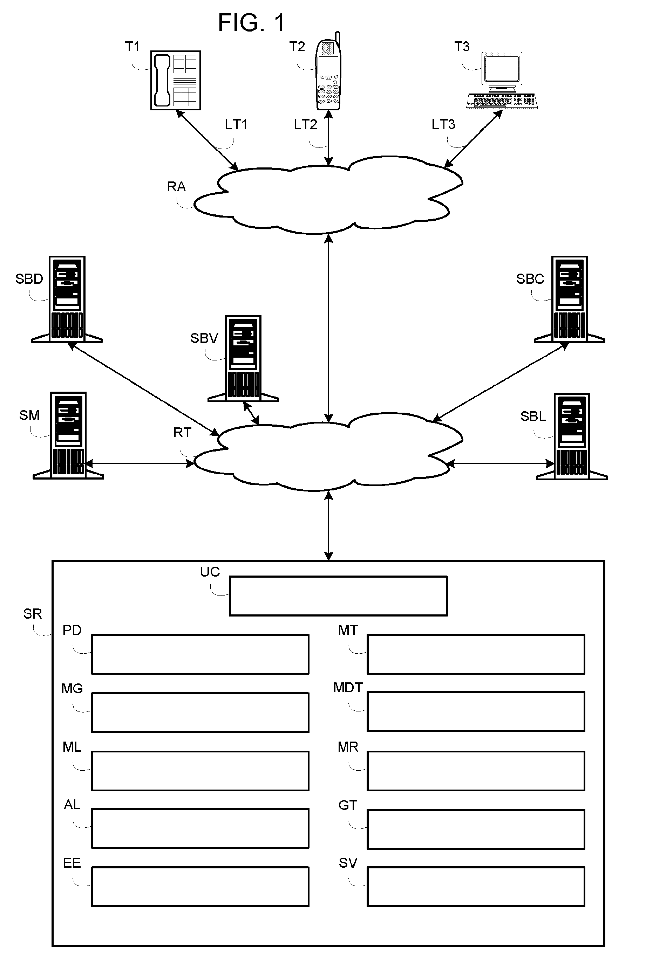

En référence à la figure 1, le système de génération de représentation imagée et vocale comprend principalement un serveur de représentation imagée et vocale SR, un serveur de base de données de documents multimédias SBD, un serveur de base de données imagées et vocales SBV, un serveur de base de données de caractéristiques de fond et de forme imagées et vocales SBC, et un serveur de base de données SBL comprenant des données linguistiques, des modèles de genre et des modèles textuels.

Le serveur de représentation imagée et vocale SR comprend principalement une unité centrale UC, un parseur de document PD, un module de détermination de genre MG, un module de détermination de langue ML, un analyseur linguistique AL, un extracteur d'entités nommées EE, un module de détermination de thème MT, un module de détermination de ton MDT, un module de résumé MR, un générateur de texte GT et un synthétiseur vocal SV. La plupart des moyens fonctionnels précités dans le serveur SR, à l'exception de l'unité centrale UC et du synthétiseur vocal SV, peuvent être des modules logiciels.

Le serveur de base de données imagées et vocales SBV comprend des éléments imagés et vocaux en correspondance avec des caractéristiques respectivement imagées et vocales. Par exemple, un élément imagé est une image de la tour Eiffel, et un élément vocal est un ensemble de paramètre définissant une voix d'un personnage masculin célèbre.

Dans la réalisation préférée montrée à la figure 1, on a représenté seulement trois terminaux d'usager T1, T2 et T3 désignés indifféremment par T dans la suite de la description. Dans la réalisation préférée de l'invention, un terminal d'usager T envoie une requête de recherche de document à un serveur de moteur de recherche SM. Le serveur de moteur de recherche effectue une recherche de documents dans le serveur de base de données de documents multimédias SBD en réponse à la requête de recherche du terminal d'usager T. Avant d'envoyer les documents correspondants au résultat de la recherche au terminal d'usager T, le serveur de moteur de recherche SM requiert auprès du serveur de représentation SR des représentations imagées et éventuellement vocales des documents correspondants au résultat de la recherche. Le serveur de représentation SR retourne au serveur de moteur de recherche SM des représentations imagées et éventuellement vocales des documents correspondants au résultat de la recherche. Le serveur de moteur de recherche SM enrichit la présentation des résultats de la recherche à envoyer au terminal d'usager T par des représentations imagées et éventuellement vocales selon l'invention.

Les représentations imagées et/ou vocales sont générées soit en temps réel par rapport à la requête du terminal d'usager T, soit antérieurement à la requête du terminal d'usager, par exemple lors de l'indexation des documents par le serveur de moteur de recherche.

Une représentation imagée ou visuelle d'un document textuel selon l'invention est au moins une image qui permet d'emblée d'appréhender intuitivement l'objet du document.

Le terminal T est relié à un réseau d'accès respectif RA par une liaison LT. Le terminal T est par exemple un terminal de radiocommunications mobile T1, la liaison LT1 est un canal de radiocommunications, et le réseau d'accès respectif RA comprend le réseau fixe d'un réseau de radiocommunications cellulaire, par exemple de type GSM (Global System for Mobile communications) avec un service GPRS (General Packet Radio Service), ou de type UMTS (Universal Mobile Telecommunications System).

Selon un autre exemple, le terminal T est un ordinateur personnel T2, relié directement par modem à la liaison LT2 de type ligne xDSL ou RNIS (Réseau Numérique à Intégration de Services) reliée au réseau d'accès RA correspondant.

Selon un autre exemple, le terminal T est un terminal fixe de télécommunications T3, la liaison LT3 est une ligne téléphonique et le réseau d'accès respectif RA comprend le réseau téléphonique commuté.

Selon d'autres exemples, le terminal d'usager T comprend un dispositif ou objet électronique de télécommunications personnel à l'usager qui peut être un assistant numérique personnel communiquant PDA. Le terminal T peut être tout autre terminal domestique portable ou non tel qu'une console de jeux vidéo, ou un récepteur de télévision intelligent coopérant avec une télécommande à afficheur ou un clavier alphanumérique servant également de souris à travers une liaison infrarouge.

Selon un autre exemple, le réseau d'accès RA comprend un réseau de raccordement de plusieurs terminaux d'usager.

Les terminaux d'usager T et les réseaux d'accès RA ne sont pas limités aux exemples ci-dessus et peuvent être constitués par d'autres terminaux et réseaux d'accès connus.

Les serveurs de bases de données SBD, SBV, SBC et SBL communiquent avec le serveur de représentation SR à travers un réseau de télécommunications RT, tel qu'internet, relié aux réseaux d'accès RA. Le serveur de moteur de recherche SM communique avec le serveur de base de données de documents multimédias SBD à travers le réseau de télécommunications RT.

En variante, au moins l'un des serveurs de base de données SBD, SBV, SBC et SBL communique localement avec le serveur de représentation SR.

Dans d'autres variantes, les données dans les serveurs de base de données SBD, SBV, SBC et SBL sont réparties dans un, deux ou trois serveurs de base de données.

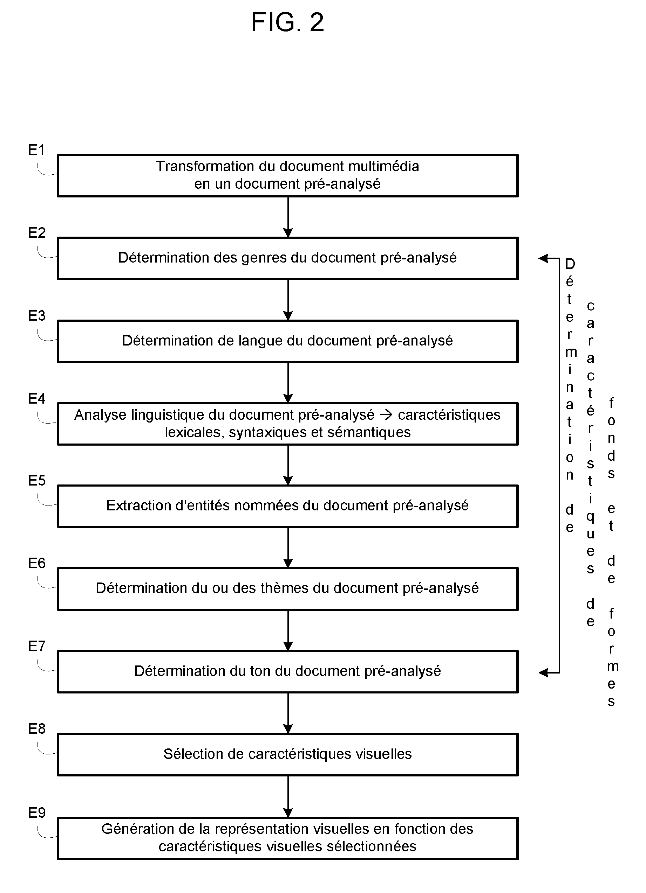

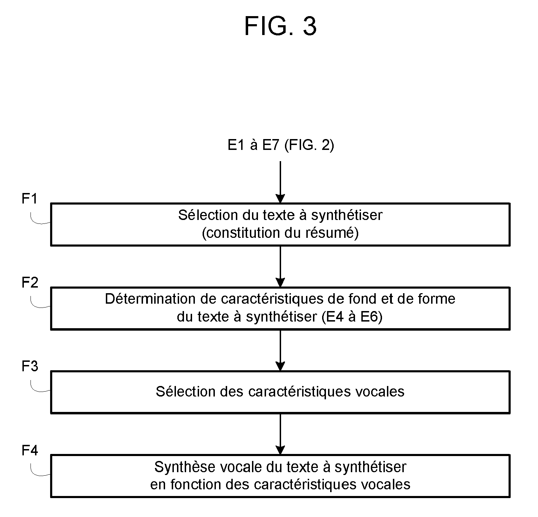

En référence à la figure 2, le **procédé de génération de représentation imagée d'un document multimédia** mémorisé initialement dans le serveur de base de données de documents multimédias SBD comprend, selon l'invention, des étapes E1 à E9 exécutées automatiquement dans le serveur de représentation SR.

A l'étape E1, le parseur de document PD transforme le document multimédia en un document pré-analysé, pour que les autres modules dans le serveur de représentation SR utilisent et interprètent le document pré-analysé quel que soit le format du document. La pré-analyse consiste à analyser le document multimédia et à créer à partir du document multimédia et de l'analyse, un document pré-analysé contenant et décrivant les différents éléments du document multimédia. Un élément de document multimédia est par exemple, un paragraphe, un titre, une image, un tableau, ou un mot. Le document pré-analysé contient des descriptions d'éléments telles que le soulignement de mot, l'écriture grasse de mot, des emplacements d'images, des vidéos, des puces, etc.

Les étapes E2 à E7 consistent à déterminer des caractéristiques de fond et de forme des éléments du document multimédia et donc du document pré-analysé. D'autres étapes peuvent être ajoutées pour déterminer d'autres caractéristiques de fond et de forme.

A l'étape E2, le module de détermination de genre MG détermine un genre du document pré-analysé. Le genre du document définit le style, le contenu et le graphisme du document. Par exemple, le genre est une brève journalistique, un résultat sportif, un document technique, un mémoire scientifique, un brevet, une recette de cuisine, ou une page d'un site internet personnel. Pour déterminer le genre du document, le module de détermination de genre MG compare le document pré-analysé à des modèles de genre mémorisés dans le serveur de base de données SBL et sélectionne le genre associé au modèle de genre le plus proche du document pré-analysé. Lorsqu'aucun modèle de genre ne peut être sélectionné, un genre par défaut est sélectionné. Les modèles de genre comprennent des informations servant à qualifier le genre d'un document, telles que des informations sur les mots ou expressions utilisés, ou la forme graphique. Le genre du document pré-analysé est mémorisé en correspondance avec le document multimédia dans le serveur de base de données de caractéristiques SBC.

A l'étape E3, le module de détermination de langue ML détermine la langue, y compris un patois ou un dialecte, du document pré-analysé en fonction de critères lexicaux et morphologiques; par exemple la langue est le français, l'anglais, le chinois, ou le breton. La langue du document est mémorisée en correspondance avec le document multimédia dans le serveur de base de données de caractéristiques SBC.

A l'étape E4, l'analyseur linguistique AL analyse le document pré-analysé pour déterminer des informations lexicales du type lemmes de mots utilisés et thèmes abordés dans le document, des informations syntaxiques du type fonctions grammaticales de mots utilisés, découpage de phrases en groupes nominaux et verbaux, et des informations sémantiques. Toutes ces informations sont mémorisées en correspondance avec le document multimédia dans le serveur de base de données de caractéristiques SBC.

A l'étape E5, l'extracteur d'entités nommées EE extrait des entités nommées, par exemple des noms de personnes, de lieux, de marques et d'entreprises, du document pré-analysé en fonction des caractéristiques lexicales, syntaxiques et sémantiques déterminées et fournies par l'analyseur linguistique AL. Les entités nommées sont mémorisées en correspondance avec le document multimédia dans le serveur de base de données de caractéristiques SBC.

A l'étape E6, le module de détermination de thème MT détermine un thème ou des thèmes majoritaires abordés par le document pré-analysé en fonction de mesures statistiques réalisées sur les caractéristiques lexicales, syntaxiques et sémantiques et éventuellement en fonction des informations contenues dans un thésaurus. Par exemple, un thésaurus fait correspondre des thèmes à des ensembles de mots, et le module de détermination de thème MT détermine pour chaque ensemble de mots la somme des répétitions de chaque mot de l'ensemble dans le document pré-analysé, et sélectionne le thème associé à l'ensemble de mot ayant la somme des répétitions maximale. Le thème est mémorisé en correspondance avec le document multimédia dans le serveur de base de données de caractéristiques SBC.

A l'étape E7, le module de détermination de ton MDT détermine le ton du document pré-analysé à partir de mots, expressions et tournures syntaxiques inclus dans le document pré-analysé qui sont extraits du document pré-analysé en fonction des caractéristiques lexicales, syntaxiques et sémantiques déterminées à l'étape E4. Par exemple, le module de détermination de ton MDT utilise un lexique de mots associés chacun à un caractère positif ou négatif respectif. Dans cet exemple, le module MDT détermine le ton en fonction du nombre de mots associés aux caractères positifs ou négatifs. Le ton d'un document est par exemple gai, triste, positif ou négatif. Le ton du document est mémorisé en correspondance avec le document multimédia dans le serveur de base de données de caractéristiques SBC.

Les paragraphes, les titres, les mots soulignés, les mots en gras, les emplacements des images, les vidéos, le genre, la langue, les informations lexicales, syntaxiques et sémantiques, les entités nommées, au moins un thème et le ton sont pour partie des caractéristiques de fond et pour partie des caractéristiques de forme du document pré-analysé. Généralement, une langue, une entité nommée et un thème sont des caractéristiques de fond. Un genre et un thème sont des caractéristiques de forme.

A l'étape E8, l'unité centrale UC sélectionne dans le serveur de base de données de caractéristiques SBC des caractéristiques imagées du document pré-analysé en fonction des caractéristiques de fond et de forme déterminées dans le serveur de base de données de caractéristiques SBC, aux étapes E2 à E7. Par exemple, pour un document multimédia donné, le genre est "cours boursier", le thème "économie" et la langue "française", et les caractéristiques imagées correspondantes sont une image présentant un "personnage de trader" éventuellement suivie, sur un arrière-plan constitué par une image de la "façade de la bourse de Paris". Dans un autre exemple, le genre est "dépêche d'actualité", le thème "économie", le ton "journalistique" et une entité nommée "Orange", et les caractéristiques imagées correspondantes sont une image représentant un "journaliste sérieux" sur un arrière-plan constitué par le logo de "Orange".

A l'étape E9, l'unité centrale UC génère la représentation imagée en fonction des caractéristiques imagées du document pré-analysé. Pour ce faire, l'unité centrale UC sélectionne des éléments imagés correspondant aux caractéristiques imagées déterminées dans le serveur de base de données imagées et vocales SBV. La représentation imagée est mémorisée en correspondance avec le document multimédia. La représentation imagée du document peut être statique (image) ou dynamique (animation) .

La représentation imagée d'un document multimédia peut être associée à une représentation vocale. En référence à la figure 3, une **génération de représentation vocale** comprend des étapes F1 à F4 complétant le procédé de génération de représentation selon l'invention et exécutées également automatiquement dans le serveur de représentation SR.

La représentation vocale peut être en correspondance avec les mouvements de la représentation imagée dynamique.

A l'étape F1, l'unité centrale UC dans le serveur de représentation SR sélectionne le texte à synthétiser en fonction du document pré-analysé décrit à l'étape E1 et des caractéristiques de fond et de forme déterminées précédemment aux étapes E2 à E7.

Par exemple, lorsque le document multimédia comprend un titre en gras, le texte à synthétiser est le titre. Dans le cas contraire, le module de résumé MR sélectionne des parties de texte du document pré-analysé représentatives du document multimédia en fonction des caractéristiques de fond et de forme déterminées précédemment, notamment en fonction de mesures statistiques effectuées sur les informations lexicales, syntaxiques et sémantiques, afin que le module MR constitue automatiquement un résumé du document multimédia en tant que texte à synthétiser.

Dans un autre exemple, lorsque le document pré-analysé ne contient pas ou peu de texte, le générateur de texte GT génère un texte à synthétiser en fonction du document pré-analysé, des caractéristiques de fond et de forme du document pré-analysé, et de modèles textuels pré-mémorisés lus dans le serveur de base de données SBL. Le générateur de texte GT génère un texte compréhensible oralement en sélectionnant un modèle textuel en fonction des caractéristiques de fond et de forme et éventuellement en complétant le modèle textuel sélectionné par des informations textuelles extraites du document pré-analysé. Par exemple, le document pré-analysé comprend un tableau de cours de bourse, le générateur GT sélectionne alors le modèle textuel correspondant à l'énonciation de cours de bourse du type "le cours de bourse de <action, indices...> est actuellement de <valeur>", et le générateur remplace <action, indices, ...> et <valeur> par des données du tableau, ce qui peut générer le texte suivant "le cours de bourse de l'indice CAC40 est actuellement de 3750". Le texte ainsi généré est le texte à synthétiser.

Dans une variante, des correcteurs de type orthographiques et/ou grammaticaux corrigent le texte à synthétiser.

A l'étape F2, des caractéristiques de fond et/ou de forme du texte à synthétiser sont déterminées. Pour cela, les étapes E3, E4, E5, E6 et E7 sont appliquées au texte à synthétiser sélectionné, afin de déterminer des informations lexicales, syntaxiques et sémantiques, des entités nommées, un ou des thèmes et un ou des tons du texte à synthétiser. Le module de détermination de thème MT détermine également des positions textuelles correspondant aux différents thèmes, c'est-à-dire les parties textuelles correspondantes à un thème particulier, et des positions textuelles correspondant aux différents tons.

A l'étape F3, l'unité centrale UC sélectionne dans le serveur de base de données de caractéristiques SBC des caractéristiques vocales du document pré-analysé en fonction des caractéristiques de fond et de forme déterminées aux étapes E2 à E7 et en fonction des caractéristiques de fond et de forme du texte à synthétiser déterminées à l'étape F2. Par exemple, pour un document multimédia donné dont le genre est "page d'informations", la langue "française", le thème du document "agriculture" et le ton du texte à synthétiser "sérieux", les caractéristiques vocales sélectionnées sont une voix "masculine", un accent "paysan français" et un fond sonore de "vent sur un champ de blé".

A l'étape F4, le synthétiseur vocal SV synthétise le texte à synthétiser en fonction des caractéristiques vocales afin de générer la représentation vocale du document. Pour ce faire, le synthétiseur vocal SV sélectionne des éléments vocaux correspondant aux caractéristiques vocales déterminées dans le serveur de base de données imagées et vocales SBV. La synchronisation entre la représentation imagée et la représentation vocale du document est réalisée notamment en fonction des positions textuelles correspondant aux différents thèmes et/ou tons du texte à synthétiser tel que le résumé.

Les correspondances prévues entre les caractéristiques de fond et de forme et les caractéristiques vocales ne sont pas limitées aux exemples ci-dessous. Les caractéristiques vocales peuvent conduire par exemple à l'adjonction d'éléments sonores prédéfinis tels que des jingles et des morceaux musicaux (par exemple associés aux entités nommées extraites), d'accents imitatifs de présentateurs, d'animateurs et d'acteurs connus, d'effets sonores tels que trémolo, chorus et robot, d'émotions sonores comme des pleurs, rires, et bégaiements.

Dans une variante, les correspondances entre les caractéristiques de fond et de forme et les caractéristiques imagées et/ou vocales dépendent du domaine d'application de l'invention.

Dans une autre variante, les correspondances dépendent également du profil d'un usager qui a souscrit un abonnement à un service mettant en oeuvre le procédé de l'invention.

Dans une autre variante, un moteur d'animation faciale synchronise les mouvements du personnage de la représentation imagée du document, notamment les mouvements labiaux, avec la représentation vocale du document.

L'invention décrite ici concerne un procédé et un système de génération de représentation imagée et vocale. Selon une implémentation préférée, les étapes du procédé sont déterminées par les instructions d'un programme de génération de représentation imagée et vocale d'un document multimédia incorporé dans un dispositif informatique comme le serveur de représentation imagée et vocale SR. Le programme comporte des instructions de programme qui, lorsque ledit programme est chargé et exécuté dans le dispositif informatique dont le fonctionnement est alors commandé par l'exécution du programme, réalisent les étapes du procédé selon l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'informations peut être un circuit intégré dans lequel le programme est incorporé, le circuit étant adapté pour exécuter ou pour être utilisé dans l'exécution du procédé selon l'invention.

## Revendications

1. Procédé pour générer une représentation imagée d'un document multimédia dans un dispositif informatique (SR), **caractérisé en ce qu'**il comprend les étapes de :
- transformer (E1) le document multimédia en un document pré-analysé décrivant des éléments du document multimédia,
- déterminer (E2 à E7) des caractéristiques de fond et de forme du document pré-analysé,
- sélectionner (E8) des caractéristiques imagées en fonction des caractéristiques de fond et de forme du document pré-analysé, et
- générer (E9) une représentation imagée du document multimédia en fonction des caractéristiques imagées sélectionnées.

2. Procédé conforme à la revendication 1, selon lequel l'étape de déterminer (E2 à E7) des caractéristiques de fond et de forme du document pré-analysé comprend au moins l'une des étapes suivantes:
- déterminer (E2) un genre du document pré-analysé en tant que caractéristique de fond et/ou de forme en comparant le document pré-analysé à des modèles de genre mémorisés dans un moyen serveur (SBL), et
- déterminer (E3) une langue du document pré-analysé en tant que caractéristique de fond et/ou de forme.

3. Procédé conforme à la revendication 1 ou 2, selon lequel l'étape de déterminer (E2 à E7) des caractéristiques de fond et de forme du document pré-analysé comprend les étapes suivantes :
- déterminer (E4) des caractéristiques lexicales, syntaxiques et sémantiques du document pré-analysé en tant que caractéristiques de fond et/ou de forme, et
- extraire (E5) des entités nommées du document pré-analysé en tant que caractéristiques de fond et/ou de forme en fonction des caractéristiques lexicales, syntaxiques et sémantiques déterminées.

4. Procédé conforme à l'une quelconque des revendications 1 à 3, selon lequel l'étape de déterminer (E2 à E7) des caractéristiques de fond et de forme du document pré-analysé comprend les étapes suivantes :
- déterminer (E4) des caractéristiques lexicales, syntaxiques et sémantiques du document pré-analysé en tant que caractéristiques de fond et/ou de forme, et
- déterminer (E6) un thème du document pré-analysé en tant que caractéristique de fond et/ou de forme en fonction notamment de mesures statistiques réalisées sur les caractéristiques lexicales, syntaxiques et sémantiques.

5. Procédé conforme à l'une quelconque des revendications 1 à 4, selon lequel l'étape de déterminer (E2 à E7) des caractéristiques de fond et de forme du document pré-analysé comprend les étapes suivantes :
- déterminer (E4) des caractéristiques lexicales, syntaxiques et sémantiques du document pré-analysé en tant que caractéristiques de fond et/ou de forme, et
- déterminer (E7) un ton du document pré-analysé en tant que caractéristique de fond et/ou de forme à partir de mots, expressions et tournures syntaxiques inclus dans le document pré-analysé qui sont extraits du document pré-analysé en fonction des caractéristiques lexicales, syntaxiques et sémantiques déterminées.

6. Procédé conforme à l'une quelconque des revendications 1 à 5, comprenant en outre les étapes de :
- sélectionner (F1) un texte à synthétiser en fonction du document pré-analysé et des caractéristiques de fond et de forme du document pré-analysé,
- déterminer (F2) des caractéristiques de fond et de forme du texte à synthétiser sélectionné,
- sélectionner (F3) des caractéristiques vocales en fonction des caractéristiques de fond et de forme du document pré-analysé et du texte à synthétiser sélectionné, et
- synthétiser (F4) vocalement le texte à synthétiser en fonction des caractéristiques vocales sélectionnées.

7. Procédé conforme à la revendication 6, comprenant une constitution d'un résumé du document multimédia en tant que texte à synthétiser par sélection de parties de texte du document pré-analysé représentatives du document multimédia en fonction des caractéristiques de fond et de forme du document pré-analysé.

8. Procédé conforme à la revendication 6 ou 7, comprenant, lorsque le document pré-analysé ne contient pas ou peu de texte, une génération d'un texte à synthétiser en fonction du document pré-analysé, des caractéristiques de fond et de forme du document pré-analysé, et de modèles textuels mémorisés dans un moyen serveur (SBL).

9. Dispositif informatique (SR) pour générer une représentation imagée d'un document multimédia, **caractérisé en ce qu'**il comprend :
- un moyen (PD) pour transformer le document multimédia en un document pré-analysé décrivant des éléments du document multimédia,
- des moyens (MG, ML, AL, EE, MT, MDT) pour déterminer des caractéristiques de fond et de forme du document pré-analysé,
- un moyen (UC) pour sélectionner des caractéristiques imagées en fonction des caractéristiques de fond et de forme du document pré-analysé, et
- un moyen (UC) pour générer une représentation imagée du document multimédia en fonction des caractéristiques imagées sélectionnées.

10. Dispositif conforme à la revendication 9, **caractérisé en ce qu'**il comprend :
- un moyen (UC, MR, GT) pour sélectionner un texte à synthétiser en fonction du document pré-analysé et des caractéristiques de fond et de forme du document pré-analysé,
- des moyens (MG, ML, AL, EE, MT, MDT) pour déterminer des caractéristiques de fond et de forme du texte à synthétiser sélectionné,
- un moyen (UC) pour sélectionner des caractéristiques vocales en fonction des caractéristiques de fond et de forme du document pré-analysé et du texte à synthétiser sélectionné, et
- un moyen (SV) pour synthétiser vocalement le texte à synthétiser en fonction des caractéristiques vocales sélectionnées.

11. Programme d'ordinateur sur un support d'informations pour générer une représentation imagée d'un document multimédia dans un dispositif informatique (SR), ledit programme comportant des instructions de programme qui, lorsque ledit programme est chargé et exécuté dans le dispositif informatique (SR), réalisent les étapes de :
- transformer (E1) le document multimédia en un document pré-analysé décrivant des éléments du document multimédia,
- déterminer (E2 à E7) des caractéristiques de fond et de forme du document pré-analysé,
- sélectionner (E8) des caractéristiques imagées en fonction des caractéristiques de fond et de forme du document pré-analysé, et
- générer (E9) une représentation imagée du document multimédia en fonction des caractéristiques imagées sélectionnées.
